# EUROPEAN PATENT SPECIFICATION

(11) **EP 1 294 230 B1**
(45) Date of publication and mention of the grant of the patent: **12.04.2006**
(21) Application number: 01951575.8
(22) Date of filing: 12.06.2001
(51) Int. Cl.: A01N 25/22

(54) **STABILISATION OF LIGHT SENSITIVE SUBSTANCES**
STABILISIERUNG VON LICHTEMPFINDLICHEN SUBSTANZEN
STABILISATION DE SUBSTANCES SENSIBLES AUX RAYONNEMENTS LUMINEUX

(30) Priority: 26.06.2000 GB 0015395
(43) Date of publication of application: 26.03.2003
(73) Proprietor: Ciba Specialty Chemicals Water Treatments Limited, Bradford, West Yorkshire BD12 0JZ (GB)
(72) Inventor: ROSE, Simon Alexander Hanson, Bradford, West Yorkshire BD2 2HX (GB); GREY, Bryan David, West Yorkshire BD6 1BE (GB); KULLAR, Jatinder Singh, Bradford, West Yorkshire BD2 4BJ (GB)
(74) Representative: Bernhardt, Wolfgang Willy-Hans
(86) International application number: PCT/EP2001/006602
(87) International publication number: WO 2002/000023

(56) References cited:
- WO-A-95/07613
- WO-A-96/33611
- GB-A- 2 058 569
- US-A- 4 440 756

## Description

The present invention relates to water-in-oil emulsion compositions comprising light sensitive substances. In the emulsion compositions the light sensitive substances are protected against rapid decomposition. The invention also relates to emulsions comprising light sensitive pesticides, and in particular to pest control formulations comprising said emulsions.

It is common practice to provide various hydrophobic active materials, such as herbicides and pesticides in the form of oil in water emulsions. Such emulsions are a convenient vehicle for the active ingredient since an aqueous emulsion is easy to handle and can easily be diluted for convenient distribution. WO-A-89/03175 describes oil-in-water emulsions having agricultural ingredients and surfactants in the aqueous phase. The surfactants listed include ethoxylated alcohols, anionic/nonionic blends, block copolymers, non-ionic ethoxylated alcohols and other types. None of the agricultural actives identified are light sensitive.

More recently WO-A-95/07613 described oil-in-water emulsions comprising a water soluble stabilising material in the aqueous phase and an oil soluble stabilising material in the oil phase. The emulsions are said to exhibit improved stability. An object of this reference relates to improving delivery of agricultural pesticides and other active ingredients and to overcome the problem in providing convenient formulations of water-insoluble pesticides in view of the difficulty of formulating them as compositions that have a high concentration but which can be diluted easily to form a sprayable composition. Various pesticides are described including cypermethrin and fenvalerate, which are fourth respectively third generation pyrethroids, being relatively stable to sunlight.

Various attempts have been made to improve the stability of light sensitive substances.

For instance US-A-5591727 describes an insecticidal composition which comprises at least one pyrethroid, at least one UV absorbing agent and at least one antioxidant from the group consisting of tocopherol derivatives and citric acid esters. This insecticidal composition can be used in a liquid form with addition of a diluent or solvent such as an aqueous and/or oily emulsion. No specific embodiments of emulsions are given.

US-A-4668666 describes pesticidal compositions based on pyrethrum and synthetic pyrethroids and includes a liquid alkyl aryl silicone polymer which stabilizes the insecticide to provide an extended effective killing life. It is stated that ultraviolet protectants and insect repellents may also be included.

JP-A-60197607 describes combatting agent that contains pyrethroid as an active ingredient, comprising a pyrethroid, as an active ingredient, such as pyrethrin I or II extracted from Dalmatian pyrethrum, pyrethrins resulting from esterification of chrysanthemumic acid containing cinerin I and II and an alcohol or allethrin, tetramethrin, resmethrin, fenotone, decamethrin or fenvalerate, which are synthetic light stable pyrethroids obtained by modifying both the chrysanthemumic acid and alcohol moieties. They can be used in the form of an emulsion.

JP-B-3041709 describes the stabilisation of pyrethroid compounds in dilute aqueous compositions. Compositions are said to contain an equivalent proportion (1:1) of surfactant and pyrethroid compound and the amount of surfactant is said to be in the range 0.01 to 1 weight %, preferably 0.1 to 0.5 weight %. The surfactants are mostly poloxyethylene based compounds, for instance polyoxyethylene alkyl allyl ether copolymer with alkyl allyl sulphonate.

However, there still exists a need for a composition in which the protection of light sensitive substances can be controlled more effectively. In particular there is a need to stabilise aqueous concentrates of light sensitive substances (e.g. pyrethroids) for prolonged periods. In particular none of the aforementioned prior art provides a solution to the problem of long term storage of pyrethroid concentrates, for example comprising concentrations of at least 10% pyrethroid active.

In addition there is also a need to provide a composition which effectively stabilises light sensitive compounds against light degradation, but which is effective at lower concentrations of surfactant based on weight of light sensitive active.

In addition it would also be desirable to conveniently provide a composition in which light sensitive substances are protected in a convenient formulation and also which negates the requirement for additional UV absorbers. It would be particularly desirable to conveniently protect light sensitive pesticides against decomposition. Furthermore there is also a need to be able to provide more reliable control of the decomposition of light sensitive pesticides such that maximum efficacy is exhibited over a predetermined period and after a prolonged period of time low levels of the pesticide remain, for example levels below that would not display any biological activity. There is also a need for a composition that exhibits all of these features and which also retains its activity when stored in the dark.

Thus according to a first aspect of the invention we provide an emulsion comprising an organic discontinuous phase which is distributed throughout a continuous aqueous phase,
wherein the organic phase comprises a light sensitive active ingredient, and the emulsion is stabilised by a water soluble stabilising material in the aqueous phase,
wherein the water-soluble stabilising material is a water-soluble stabilising polymer which has a plurality of hydrophilic and hydrophobic groups and is selected from partially hydrolysed polyvinyl acetate and
addition copolymers formed from
(i) at least one ethylenically unsaturated carboxylic acid esters and
(ii) at least one ethylenically unsaturated carboxylic acid or ethylenically unsaturated carboxylic acid anhydride,
and wherein the organic phase further comprises,
a) an organic solvent which is a liquid at 25°C and/or
b) an organic phase stabilising material which comprises hydrophobic moieties and is a material which is more soluble in the organic phase than in the aqueous phase, and wherein the light sensitive active ingredient is pyrethrum or a first or second generation pyrethroid.

The light sensitive active ingredient is a material which in neat form decomposes on exposure to light, for instance sunlight.

A second aspect of the invention provides a pest control formulation comprising a stable emulsion that comprises an organic discontinuous phase which is distributed throughout a continuous aqueous phase,
wherein the organic phase comprises a light sensitive pesticide compound, and the emulsion is stabilised by a water soluble stabilising material in the aqueous phase,
wherein the water-soluble stabilising material is a water-soluble stabilising polymer which has a plurality of hydrophilic and hydrophobic groups and is selected from partially hydrolysed polyvinyl acetate and
addition copolymers formed from
(i) at least one ethylenically unsaturated carboxylic acid esters and
(ii) at least one ethylenically unsaturated carboxylic acid or ethylenically unsaturated carboxylic acid anhydride,
and wherein the organic phase further comprises,
a) an organic solvent which is a liquid at 25°C and/or
b) an organic phase stabilising material which comprises hydrophobic moieties and is a material which is more soluble in the organic phase than in the aqueous phase, and wherein the light sensitive active ingredient is pyrethrum or a first or second generation pyrethroid.

The pest control formulation is desirably used for specific localised applications, for instance domestic, industrial and veterinary applications. Typically the treatment may be in order to destroy a colony of insects or to treat other insect infestations. Thus such treatments tend to be localised as opposed to for instance wide area agricultural treatments.

The light sensitive pesticide is a pesticide material which in neat form decomposes on exposure to light, for instance sunlight. Typical examples of light sensitive pesticides include first and second generation pyrethroids, for instance pyrethrum or d-phenothrin.

The water soluble polymeric stabiliser may be selected from aqueous phase stabilisers given in WO-A-95/07613.

Typically the water soluble polymeric stabiliser comprises both hydrophilic moieties and hydrophobic moieties in such a proportion that the stabiliser is more soluble in the aqueous phase than in the organic phase. The stabiliser may be a polymeric surfactant which exhibits a high hydrophilic lipophilic balance' (HLB), for instance HLB at least 6, preferably in the range 8 to 12.

Desirably the water-soluble stabilising material includes for instance partially or fully hydrolysed polyvinyl acetate. Preferably however the water soluble stabiliser is an addition copolymer of water-soluble or potentially water-soluble ethylenically unsaturated monomer and water-insoluble ethylenically unsaturated monomers. By water soluble we mean that the water soluble monomer has a solubility in water of at least 5g in 100 ml of water. Potentially water soluble means that the monomer will react on addition to water and provides a water soluble monomer with the requisite degree of water solubility, for instance maleic anhydride. By water insoluble monomer we mean that the monomer has a solubility in water of no more that 5g in 100 ml of water. Often the water insoluble monomer will have a solubility in water of below 1 or 2 g in 100 ml and is typically of negligible solubility. When the water-soluble stabilising material is a partially hydrolysed polyvinyl acetate it will typically be prepared by hydrolysing a polymer of vinyl acetate. For instance the homopolymer of vinyl acetate may first be prepared by aqueous emulsion polymerisation and the polyvinyl acetate may be partially hydrolysed by reaction with sodium hydroxide in order to convert many of the vinyl acetate repeating units to vinyl alcohol repeating units. The polyvinyl acetate may for instance be at least 90% hydrolysed, preferably around 95% hydrolysed.

Preferably the water-soluble stabilising material is an addition polymer of water insoluble ethylenically unsaturated monomer and water soluble ethylenically unsaturated monomer which are free from polyethoxy groups, for instance ethylenically unsaturated monomers that carry functional groups such as carboxylic acid, amine, amide, hydroxyl or other polar or ionic groups. More preferably the water-soluble stabilising material is selected from addition copolymers formed from a) at least one ethylenically unsaturated carboxylic acid ester and b) at least one ethylenically unsaturated carboxylic acid or ethylenically unsaturated carboxylic acid anhydride and wherein the polymer is combined with an alkaline compound in order to render the polymer water-soluble.

In an especially preferred form of the invention the water-soluble stabilising material is a polymer that has been formed from a) at least one ethylenically unsaturated carboxylic acid esters, selected from the group consisting of methyl acrylate, methyl methacrylate, ethyl acrylate, ethyl methacrylate, n-propyl acrylate, n-propyl methacrylate, iso-propyl acrylate and iso-propyl methacrylate, b) at least one ethylenically unsaturated carboxylic acid or ethylenically unsaturated carboxylic acid anhydride selected from the group consisting of acrylic acid, methacrylic acid, maleic acid and maleic anhydride. Desirably the polymer may comprise 50 to 90% by weight of methyl acrylate, 10 to 30% ethyl methacrylate and 10 to 40% maleic anhydride.

The polymer may be prepared by a standard aqueous emulsion polymerisation technique followed by reaction with an alkaline compound, such as sodium hydroxide, in order to saponify the esters and render the polymer water-soluble. In a preferred form of the invention the water soluble stabilising material can be prepared in an organic solvent following by separating the polymer and neutralising using an alkaline agent in order to form a neutralised aqueous solution. Polymerisation may be effected by use of a suitable initiating system, for instance by use of azo thermal initiators, for instance azobisisobutyronitrile (AZDN).

The amount of water soluble stabilising material required will vary depending upon the particular stabiliser and the proportion of dispersed phase to aqueous phase contained in the emulsion. Typically the emulsion comprises the water-soluble stabilising material in an amount of from 0.1 to 15.0% by weight of emulsion. Preferably the amount of water-soluble stabiliser is between 1.5 and 8% by weight of emulsion.

Generally the amount of water soluble stabilising material can be less than 30 weight % based on weight of light sensitive active. Usually the amount of water soluble stabilising material is no more that 20% and typically this will often be around 10% by weight.

The organic phase may comprise any organic solvent that is a liquid at 25°C and is a substance in which the light sensitive active is soluble, miscible or dispersible. Preferably the active is dissolved in the organic solvent. The organic solvent may be an aromatic or aliphatic organic liquid, for instance an C₃ or greater alkyl substituted aromatic compound or an alkyl benzene/solvent naphtha. Preferably the organic solvent is an alkyl ester of a carboxylic acid. More preferably the solvent is a carboxylic acid ester in which the an alcohol moiety contains at least 4 carbon atoms, for instance a C4-30 alkyl ester of a carboxylic acid. Typically this may be a monomeric but saturated ester such as iso butyl acetate, lauryl acetate, iso butyl isobutyrate and lauryl isobutyrate. It may for instance be a monomeric ethylenically unsaturated ester, for instance isobutyl methacrylate or lauryl methacrylate.

When the organic phase comprises an organic solvent it is ideally present in an amount that promotes both stability of the emulsion and longevity of the light sensitive active material. Typically the organic solvent is used in an amount between 5 and 50% by weight of emulsion. Preferably the emulsion comprises the organic solvent in an amount between 10 and 45%, more preferably 20 to 40% by weight. We have found that highly effective results are obtained when the emulsion comprises 25 to 35% by weight organic solvent.

Alternatively the organic phase comprises an organic phase stabilising material which is a substance which is more soluble in the organic phase in comparison to the aqueous continuous phase. The organic phase stabiliser may be selected from addition copolymers formed from a) at least one ethylenically unsaturated monomer containing C₈₋₃₀ alkyl moieties, b) at least one ethylenically unsaturated carboxylic acids or ethylenically unsaturated acid anhydrides and c) optionally other water insoluble etlylenically unsaturated monomers. The ethylenically unsaturated monomer containing C₈₋₃₀ alkyl moieties may be for instance (meth)acrylic esters, N- substituted (meth)acrylamides and (meth)allyl ethers. Preferably the organic phase stabilising material is selected from addition polymers formed from a monomer mixture comprising a) 60 to 90 % by weight C₈. ₃₀ alkyl (meth)acrylate, b) 10 to 40% by weight of at least on monomer selected from the group consisting of maleic acid, maleic anhydride, acrylic acid and methacrylic acid and c) 0 to 50% by weight at least one monomer selected from the group consisting of C₁₋₇ alkyl (meth)acrylates, styrene, vinyl acetate and acrylonitrile.

Typically the polymeric organic phase stabilisers may be prepared by polymerising the monomer mixture in an organic solvent using standard polymerisation techniques. Such polymers may suitably be formed by polymerisation of a solution of the monomer blend in a suitable organic solvent and for instance employing suitable radical generating initiators, for instance thermal initiators e.g. azobisisobutyronitrile (AZDN).

An alternative preferred organic phase stabiliser is a low hydrophilic/lipophilic balance (HLB) surfactant. Typically the surfactant comprises a hydrophilic / lipophilic balance of below 7, preferably in the range 2 to 6. The low HLB surfactant may not necessarily be a polymer, provided that the compound comprises hydrophilic and lipophilic moieties in proportions such that it is more soluble in the organic phase than in the aqueous phase. A particularly preferred low HLB surfactants according to the invention includes sorbitan monooleate. The amount of organic phase stabilising material required will vary depending upon the particular stabiliser and the proportion of dispersed phase to aqueous phase contained in the emulsion. Generally we have found that in order to achieve maximum stability and protection for the light sensitive substance or specifically light sensitive pesticide it is desirable for the organic phase stabilising material to be present in the emulsion in an amount between 0.1 and 15.0% by weight of emulsion. However, we have found the best results are obtained when the stabiliser is present in an amount between 1.5 and 8% by weight.

In a preferred composition the emulsion comprises in the organic phase both an organic solvent in an amount of from 5 to 50% by weight and an organic phase polymeric stabiliser in an amount of from 0.1 to 15.0% by weight.

It may be desirable to include other ingredients in the emulsion of the first aspect of the invention and the pesticide formulation of the second aspect of the invention. For instance in order to prevent problems with instability when exposed to cold temperatures, it may be desirable to include antifreeze additives, for instance monopropylene glycol and monoethylene glycol.

We have found that the emulsions provide surprisingly good results in the protection of the light sensitive active ingredient against the effects of light, for instance sunlight. We have found that the light sensitive active ingredient can be protected against the deleterious effects of light (especially sunlight) for prolonged periods even in the absence of ultra-violet light absorbers or antioxidants. Therefore we are able to conveniently provide compositions with prolonged protection to light sensitive active ingredients which avoids the use of expensive or environmentally unfriendly chemical ultra-violet light absorbers or antioxidant co-additives. Hence in a still preferred composition we find that the light sensitive active is protected against the degrading effects of light, especially sunlight, even substantially in the absence of ultraviolet light absorbers or antioxidants. In a more preferred form the composition retains substantially all of its activity when stored in the dark and ideally in the dark retains as much activity as the neat pesticide.

Consequently in a more preferred form of the first aspect of the invention we provide a stable emulsion consisting essentially of an organic phase which contains i) a light sensitive active ingredient and ii) an organic solvent which is liquid at 25°C and/or an organic phase stabilising material comprises hydrophobic moieties and is a material which is more soluble in the organic phase than the aqueous phase, said organic phase being distributed throughout an aqueous continuous phase that contains water and a water-soluble stabilising material which is a water-soluble stabilising polymer which has a plurality of hydrophilic and hydrophobic groups and optionally an antifreeze compound.

In a preferred form of the invention we also provide a pest control formulation comprising a stable emulsion consisting essentially of an organic phase which contains i) a light sensitive pesticide and ii) an organic solvent which is liquid at 25°C and/or an organic phase stabilising material which comprises hydrophobic moieties and is a material which is more soluble in the organic phase than in the aqueous phase, said organic phase being distributed throughout an aqueous continuous phase that contains water and a water-soluble stabilising material which is a water-soluble stabilising polymer which has a plurality of hydrophilic and hydrophobic groups and optionally an antifreeze compound.

An important aspect of pesticide formulations is that the pesticide must be sufficiently effective to provide effective control against pests for a sufficient time. Thus it is desirable that on application of the pesticide formulation that decomposition of the pesticide on exposure to light, especially sunlight is reduced such that substantially complete decomposition occurs at least 2 or 3 times as long as when the light sensitive substance (e.g. pesticide) is in neat form. Often we find that that the longevity of the composition is such that decomposition takes at least 10 times as long as the neat substance. Preferably this decomposition is between 5 times and 20 times as long as when the substance is in neat form.

It is also becoming increasingly important to control residual levels of pesticide, particularly for domestic, industrial and veterinary applications. Thus we have found that preferably the pesticide formulations of the present invention with exposure to light exhibit low levels of the pesticide remain after 12 weeks, more preferably after 6 weeks. Ideally the amounts of pesticide that remain after 6 or 12 weeks are below the levels that display biological activity. More preferably still substantially no pesticide or only levels of pesticide which are essentially undetectable will remain after this period.

When the composition is for instance an insecticidal concentrate containing for instance at least 10% pyrethroid compound, it may be used as such directly or alternatively diluted. Typically the concentrate would be diluted to an active concentration of 0.1 to 0.5% by weight pyrethroid. The composition of the present invention will tend to contain relatively lower amounts of stabilising materials based on weight of active ingredient. Consequently reduced levels of surface active materials are introduced into the environment.

According to a further aspect of the invention we provide a method of protecting a light sensitive substance which in neat form decomposes on exposure to light, preferably sunlight, said method of protection comprises the steps,
A) forming an organic phase comprising the light sensitive substance,
B) forming an aqueous phase comprising water and a water soluble stabilising material which is a polymer having a plurality of hydrophilic and hydrophobic groups and which is dissolved in the aqueous phase,
C) introducing the organic phase formed in step 1 into the aqueous phase formed in step 2 and mechanically homogenising thereby providing a stable oil-in-water emulsion,
wherein the water-soluble stabilising material is a water-soluble stabilising polymer which has a plurality of hydrophilic and hydrophobic groups and is selected from partially hydrolysed polyvinyl acetate and
addition copolymers formed from
(i) at least one ethylenically unsaturated carboxylic acid esters and
(ii) at least one ethylenically unsaturated carboxylic acid or ethylenically unsaturated carboxylic acid anhydride,
and wherein the organic phase further comprises,
a) an organic solvent which is a liquid at 25°C and/or
b) an organic phase stabilising material which comprises hydrophobic moieties and is a material which is more soluble in the organic phase than in the aqueous phase, and wherein the liquid sensitive active ingredient is pyrethrum or a first or second generation pyrethroid.

Desirably the method enables the decomposition of the light sensitive substance on exposure to light, preferably sunlight to be reduced such that substantially complete decomposition occurs at least 2 or 3 times, more preferably at least 10 times as long as when the substance is in neat form. In a preferred form the decomposition of the light sensitive substance on exposure to light, especially sunlight is reduced such that substantially complete decomposition occurs between 5 times and 20 times as long as when the substance is in neat form.

The aforementioned specific features of the water-soluble stabilising material and organic phase stabilising material also apply to this further aspect of the invention.

The following examples illustrate the invention.

### Example 1

Emulsion A is prepared by first forming an aqueous phase comprising 48.23 parts weight water and 2.03 parts by weight of a 95% hydrolysed polyvinyl acetate. The aqueous solution is added to a resin pot and warmed to 40°C. The solution is stirred using a overhead marine impeller set at 300rpm. An organic phase is prepared comprising 28.14 parts by weight iso-butyl methacrylate and 0.72 parts by weight hydroxypropyl methacrylate and 20.10 parts by weight pyrethrum extract. The organic phase is added to the aqueous phase slowly over a period of 90 minutes using a peristaltic pump. The dispersion is maintained at 40°C for a further three hours and then cooled and transferred into a sample bottle.

### Example 2

Emulsion B is prepared by repeating example 1 except that 27.74 parts by weight of lauryl methacrylate is used in place of isobutyl methacrylate and 0.71 parts by weight hydroxypropyl methacrylate, 22.01 parts by weight pyrethrum extract, 47.56 parts by weight water and 1.98 parts by weight 95% hydrolysed polyvinyl acetate are used.

### Example 3

Emulsion C is prepared by repeating example 1 except that the organic phase phase contains no iso butyl methacrylate or hydroxpropyl methacrylate.

### Example 4

Emulsion D is prepared by repeating example 1 except that 27.74 parts by weight isobutyl isobutyrate is used in place of isobutyl methacrylate and 0.71 parts by weight hydroxypropyl methacrylate, 22.01 parts by weight pyrethrum extract, 47.56 parts by weight water and 1.98 parts by weight 95% hydrolysed polyvinyl acetate are used.

### Example 5

Emulsion E is prepared by repeating example 1 except that the partially hydrolysed polyvinyl acetate is replaced by aqueous stabiliser A1 and the isobutyl methacrylate and hydroxypropyl methacrylate are replaced by organic phase stabiliser O1.

Aqueous phase stabiliser A1 is a copolymer of butyl acrylate, ethyl acrylate, methyl methacrylate and methacrylic acid (30/30/25/15 % by weight) prepared as an aqueous dispersion which is neutralised with ammonium hydroxide solution to provide a 25% by weight aqueous solution of the copolymer.

The organic phase stabiliser 01 is a copolymer of stearyl methacrylate, styrene and maleic anhydride (60/30/10 % by weight) in organic solvent Isopar G and is polymerised using standard polymerisation techniques.

Emulsion E is formed from pyrethrum extract 25 parts by weight, organic phase stabiliser 01 12.93 parts by weight, water 46.82 parts by weight, aqueous phase stabiliser A1 7.75 parts by weight and mono propylene glycol (included in the aqueous phase) 7.50 parts by weight.

### Example 6

Emulsion F is prepared by repeating example 2 except that the organic phase is homogenised into the aqueous phase to produce a smaller average diameter size of the dispersed phase droplets.

### Example 7

Emulsion G is prepared by repeating example 2 except that 1 part by weight 95% partially hydrolysed polyvinyl acetate water soluble stabiliser is used and the emulsion is prepared by overhead stirring.

### Example 8

Emulsion H is prepared by repeating example 2 except that 3 parts by weight 95% partially hydrolysed polyvinyl acetate water soluble stabiliser is used and the emulsion is prepared by overhead stirring.

### Example 9

Samples of the emulsions A to H are diluted in water and sprayed onto a glass plates to give a concentration of 250mg/m² active pesticide/m². The samples are tested for biological knockdown of cockroaches for 15 minute and 24 hour exposure on the plates and the effectiveness of the pesticide on the treated plates monitored periodically under light and dark conditions.

The results of the tests conducted in daylight are shown in Table 1 and those conducted in the dark are shown in Table 2.

**Table 1 Daylight results**

| Emulsion Sample | % Kill after 15 minute exposure, 24 hour exposure in brackets | | | | | | |
|---|---|---|---|---|---|---|---|
| | Duration in days following application of emulsion to plates | | | | | | |
| | 1 | 7 | 14 | 21 | 42 | 63 | 84 |
| A | 100 | 40(100) | 0(50) | 0(0) | 0(0) | 10(20) | 0(0) |
| B | 100 | 100 | 100 | 10(10) | 0(10) | 10(20) | 0(0) |
| C | 100 | 0(90) | 60(90) | 0(0) | 0(10) | 0(0) | 0(0) |
| D | 100 | 100 | 60(100) | 90(90) | - | - | - |
| E | 100 | 80(90) | 100 | 50(100) | - | - | - |
| F | 100 | 80(100) | 30(100) | 0(20) | - | - | - |
| G | 100 | 100 | 100 | 50(100) | - | - | - |
| H | 100 | 100(90) | 20(100) | 0(10) | - | - | - |

**Table 2 Dark results**

| Emulsion Sample | % Kill after 15 minute exposure, 24 hour exposure in brackets | | | | | | | |
|---|---|---|---|---|---|---|---|---|
| | Duration in days following application of emulsion to plates | | | | | | | |
| | 1 | 7 | 14 | 21 | 42 | 63 | 91 | 119 |
| A | 100 | 100 | 100 | 100 | 100 | 100 | 10(100) | 10(100) |
| B | 100 | 100 | 100 | 100 | 100 | 100 | 100 | 100 |
| C | 100 | 0(90) | 60(60) | 0(0) | 0(0) | 0(0) | 0(0) | 0(0) |
| D | 100 | 100 | 100 | 80(100) | - | - | - | - |
| E | 90(100) | 90(100) | 100 | 40(100) | - | - | - | - |
| F | 100 | 100 | 100 | 100 | - | - | - | - |
| G | 100 | 100 | 100 | 100 | - | - | - | - |
| H | 100 | 100 | 100 | 100 | - | - | - | - |

### Example 10

Emulsion I is prepared by repeating example 1 except that d-phenothrin is used in place of pyrethrum extract and the aqueous phase contains water 47.56 parts by weight, 95% hydrolysed polyvinyl acetate 1.98 parts by weight and the organic phase contains 27.74 parts by weight lauryl methacrylate, 0.71 parts by weight hydroxypropyl methacrylate, 5.50 parts by weight d-phenothrin technical and 16.51 parts by weight Isopar G.

### Example 11

Emulsion J is prepared by repeating example 10 except that lauryl methacrylate, and hydroxypropyl methacrylate in the organic phase are replaced by sorbitan monooleate and 5 parts by weight alkyl benzene/solvent naphtha solvent and the partially hydrolysed polyvinyl acetate is replaced by aqueous stabiliser A1 from example 6.

The aqueous phase stabiliser contains 62.23 parts by weight water, 12 parts by weight 25% aqueous stabiliser A1 and 7.5 parts by weight mono propylene glycol and the organic phase contains 10.87 parts by weight d-phenothrin technical and 2 parts by weight sorbitan monooleate organic phase stabiliser.

### Example 12

Samples of the emulsions I and J and neat d-phenothrin are diluted in water and sprayed onto a glass plates to give a concentration of 30mg active pesticide/m². The samples are tested for biological knockdown of cockroaches for 15 minute and 24 hour exposure on the plates and the effectiveness of the pesticide on the treated plates monitored periodically under light and dark conditions. The results of the tests conducted in daylight are shown in Table 3. and those conducted in the dark are shown in Table 4.

**Table 3 Daylight results**

| Emulsion Sample | % Kill after 15 minute exposure, 24 hour exposure in brackets | | | | | | |
|---|---|---|---|---|---|---|---|
| | Duration in days following application of emulsion to plates | | | | | | |
| | 1 | 7 | 14 | 21 | 49 | 63 | 91 |
| 1 | 100 | 80(100) | 10(100) | 50(60) | 10(0) | 0(50) | 10(0) |
| J | 100 | 100 | 100 | 100 | 10(10) | 30(10) | 0(0) |
| phenothrin | 100 | 0(10) | 0(0) | 10(0) | 10(10) | 10(40) | 0(0) |

**Table 4 Dark results**

| Emulsion Sample | % Kill after 15 minute exposure, 24 hour exposure in brackets | | | | | | |
|---|---|---|---|---|---|---|---|
| | Duration in days following application of emulsion to plates | | | | | | |
| | 1 | 7 | 14 | 21 | 49 | 63 | 91 |
| 1 | 100 | 100 | 100 | 100 | 100 | 100 | 100 |
| J | 100 | 100 | 100 | 100 | 100 | 100 | 100 |
| phenothrin | 100 | 100 | 100 | 100 | 100 | 100 | 100 |

The results show that emulsions of the present invention A, B, D to J show improved pesticide longevity in daylight over emulsion C. The results show that the most effective compositions are emulsions D, E and J. Thus the benefit of the emulsions comprising polymeric water soluble stabilsers, especially the acrylic based stabilisers can clearly be seen.

## Claims

1. An emulsion comprising an organic discontinuous phase which is distributed throughout a continuous aqueous phase,
wherein the organic phase comprises a light sensitive active ingredient,
and the emulsion is stabilised by a water soluble stabilising material in the aqueous phase,
wherein the water-soluble stabilising material is a water-soluble stabilising polymer which has a plurality of hydrophilic and hydrophobic groups and is selected from partially hydrolysed polyvinyl acetate and
addition copolymers formed from
(i) at least one ethylenically unsaturated carboxylic acid esters and
(ii) at least one ethylenically unsaturated carboxylic acid or ethylenically unsaturated carboxylic acid anhydride,
and wherein the organic phase further comprises,
a) an organic solvent which is a liquid at 25°C and/or,
b) an organic phase stabilising material which comprises hydrophobic moieties and is a material which is more soluble in the organic phase than in the aqueous phase
wherein the light sensitive active ingredient is pyrethrum or a first or second generation pyrethroid.

2. An emulsion according to claim 1 in which the water-soluble stabilising material is selected from addition copolymers formed from a) at least one ethylenically unsaturated carboxylic acid esters and b) at least one ethylenically unsaturated carboxylic acid or ethylenically unsaturated carboxylic acid anhydride and wherein the polymer is combined with an alkaline compound in order to render the polymer water-soluble.

3. An emulsion according to claim 1 or claim 2 in which the organic phase comprises an organic solvent which is selected from carboxylic acid esters comprising an alcohol moiety of at least 4 carbon atoms.

4. An emulsion according to any of claims 1 to 3 in which the organic phase comprises an organic phase stabilising material which is selected from addition copolymers formed from a) at least one ethylenically unsaturated monomer containing C₈₋₃₀ alkyl moieties, b) at least one ethylenically unsaturated carboxylic acids or ethylenically unsaturated acid anhydrides and c) optionally other water Insoluble ethylenically unsaturated monomers.

5. An emulsion according to any one of claims 1 to 4 in which the organic phase stabilising material is selected from addition polymers formed from a) 60 to 90 % by weight C₈₋₃₀ alkyl (meth)acrylate, b) 10 to 40% by weight of at least one monomer selected from the group consisting of maleic acid, maleic anhydride, acrylic acid and methacrylic acid and c) 0 to 50% by weight at least one monomer selected from the group consisting of C₁₋₇ alkyl (meth)acrylates, styrene, vinyl acetate and acrylonitrile.

6. An emulsion according to any one of claims 1 to 5 in which the organic phase stabilising material is a surfactant which has a hydrophllic/lipophilic balance of below 7, preferably in the range 2 to 6.

7. An emulsion according to any one of claims 1 to 6 in which the amount of water-soluble stabilising material is from 0.1 to 15.0% by weight of emulsion.

8. An emulsion according to any one of claims 1 to 7 in which the amount of organic solvent is between 5 and 50% by weight of emulsion.

9. An emulsion according to any one of claims 1 to 8 in which the amount of organic phase stabilising material is from 0.1 to 15.0% by weight of emulsion.

10. An emulsion according to any one of claims 1 to 9 in which the light sensitive active ingredient is a material which in neat form decomposes on exposure to light, preferably sunlight.

11. An emulsion according to any one of claims 1 to 10 in which the light sensitive active ingredient is selected from a pesticide, a herbicide and a veterinary treatment active.

12. An emulsion according to any one of claims 1 to 11 in which the light sensitive active ingredient is selected from light sensitive pyrethroids.

13. A pest control formulation comprising an emulsion according to claim 1 in which the light sensitive active ingredient is a light sensitive pesticide compound.

14. A formulation according to claim 13 in which the water-soluble stabilising material is selected from addition copolymers of water-soluble ethylenically unsaturated monomer free of polyethoxy groups and water-insoluble ethylenically unsaturated monomers.

15. A formulation according to claim 13 or claim 14 in which the water-soluble stabilising material is selected from addition copolymers formed from a) at least one ethylenically unsaturated carboxylic acid ester and b) at least one ethylenically unsaturated carboxylic acid or ethylenically unsaturated carboxylic acid anhydride and wherein the polymer is combined with an alkaline compound in order to render the polymer water-soluble.

16. A formulation according to any one of claims 13 to 15 in which the organic phase comprises an organic solvent which is selected from carboxylic acid esters comprising an alcohol moiety of at least 4 carbon atoms.

17. A formulation according to any of claims 13 to 16 in which the organic phase comprises an organic phase stabilising material which is selected from addition copolymers formed from a) at least one ethylenically unsaturated monomer containing C₈₋₃₀ alkyl moieties, p) at least one ethylenically unsaturated carboxylic acids or ethylenically unsaturated acid anhydrides and c) optionally other water insoluble ethylenically unsaturated monomers.

18. A formulation according to any one of claims 13 to 17 in which the organic phase stabilising material is selected from addition polymers formed from a) 60 to 90 % by weight C₈₋₃₀ alkyl (math)acrylate, b) 10 to 40% by weight of at least one monomer selected from the group consisting of maleic acid, maleic anhydride, acrylic acid and methacrylic acid and c) 0 to 50% by weight at least one monomer selected from the group consisting of C₁₋₇ alkyl (meth)acrylates, styrene, vinyl acetate and acrylonitrile.

19. A formulation according to any one of claims 13 to 18 in which the organic phase stabilising material is a surfactant which has a hydrophilic/lipophilic balance of below 7, preferably in the range 2 to 6.

20. A formulation according to any one of claims 13 to 19 in which the amount of water-soluble stabilising material is from 0.1 to 15.0% by weight of emulsion.

21. A formulation according to any one of claims 13 to 20 in which the amount of organic solvent is from 5 to 50% by weight of emulsion.

22. A formulation according to any one of claims 13 to 21 in which the amount of organic phase stabilising material is between 0.1 and 15.0% by weight of emulsion.

23. A formulation according to any one of claims 13 to 22 in which the light sensitive pesticide is a material which in neat form decomposes on exposure to light, preferably sunlight.

24. A formulation according to any one of claims 13 to 23 in which the pesticide is selected from light sensitive pyrethroids.

25. A method of protecting a light sensitive substance which in neat form decomposes on exposure to light, preferably sunlight, said method of protection comprises the steps,
A) forming an organic phase comprising the light sensitive substance,
B) forming an aqueous phase comprising water and a water soluble stabilising material,
C) introducing the organic phase formed in step 1 into the aqueous phase formed in step 2 and mechanically homogenising thereby providing a stable oil-in-water emulsion,
wherein the water-soluble stabilising material is a water-soluble stabilising polymer which has a plurality of hydrophilic and hydrophobic groups and is selected from partially hydrolysed polyvinyl acetate and
addition copolymers formed from
(i) at least one ethylenically unsaturated carboxylic acid esters and
(ii) at least one ethylenically unsaturated carboxylic acid or ethylenically unsaturated carboxylic acid anhydride,
and wherein the organic phase further comprises,
a) an organic solvent which is a liquid at 25°C and/or
b) an organic phase stabilising material which comprises hydrophobic moieties and is a material which is more soluble in the organic phase than in the aqueous phase and
wherein the light sensitive active ingredient is pyrethrum or a first or second generation pyrethroid.

26. A method according to claim 25 in which the decomposition of the light sensitive substance on exposure to light, preferably sunlight, is reduced such that substantially complete decomposition occurs at least 2 times as long as when the substance is in neat form.

27. A method according to claim 25 or claim 26 in which the decomposition of the light sensitive substance on exposure to light, preferably sunlight, is reduced such that substantially complete decomposition occurs between 5 times and 10 times as long as when the substance is in neat form.

## Patentansprüche

1. Emulsion, umfassend eine organische diskontinuierliche Phase, welche innerhalb einer kontinuierlichen wässrigen Phase verteilt ist,
wobei die organische Phase einen lichtempfindlichen aktiven Bestandteil umfasst,
und die Emulsion durch ein wasserlösliches Stabilisierungsmaterial in der wässrigen Phase stabilisiert ist,
wobei das wasserlösliche Stabilisierungsmaterial ein wasserlösliches Stabilisierungspolymer ist, welches eine Vielzahl von hydrophilen und hydrophoben Gruppen aufweist und aus
partiell hydrolisiertem Polyvinylacetat und
Additionscopolymeren, welche aus
(i) mindestens einem ethylenisch ungesättigten Carbonsäureester und
(ii) mindestens einer/m ethylenisch ungesättigten Carbonsäure oder ethylenisch ungesättigten Carbonsäureanhydrid gebildet werden,
ausgewählt ist, und wobei die organische Phase weiterhin
a) ein organisches Lösungsmittel, welches bei 25°C eine Flüssigkeit darstellt, und/oder
b) ein die organische Phase stabilisierendes Material, welches hydrophobe Einheiten aufweist und ein Material ist, welches in der organischen Phase löslicher als in der wässrigen Phase ist,
umfasst, wobei der lichtempfindliche aktive Bestandteil Pyrethrum oder ein Pyrethroid der ersten oder zweiten Generation ist.

2. Emulsion gemäß Anspruch 1, worin das wasserlösliche Stabilisierungsmaterial aus Additionscopolymeren ausgewählt ist, welche aus a) mindestens einem ethylenisch ungesättigten Carbonsäureester und b) mindestens einer/m ethylenisch ungesättigten Carbonsäure oder ethylenisch ungesättigten Carbonsäureanhydrid gebildet werden, und wobei das Polymer mit einer basischen Verbindung kombiniert wird, um das Polymer wasserlöslich zu machen.

3. Emulsion gemäß Anspruch 1 oder Anspruch 2, worin die organische Phase ein organisches Lösungsmittel umfasst, welches aus Carbonsäureestern ausgewählt ist, welche eine Alkoholeinehit mit mindestens vier Kohlenstoffatomen umfassen.

4. Emulsion gemäß einem der Ansprüche 1 bis 3, worin die organische Phase ein die organische Phase stabilisierendes Material umfasst, welches aus Additionscopolymeren ausgewählt ist, welche aus a) mindestens einem ethylenisch ungesättigten, C₈₋₃₀-Alkyleinheiten enthaltenden Monomer, b) mindestens einer/m ethylenisch ungesättigten Carbonsäure oder ethylenisch ungesättigten Säureanhydrid und c) wahlweise anderen wasserunlöslichen, ethylenisch ungesättigten Monomeren gebildet werden.

5. Emulsion gemäß einem der Ansprüche 1 bis 4, worin das die organische Phase stabilisierende Material aus Additionspolymeren ausgewählt ist, welche aus a) 60 bis 90 Gew.-% C₈₋₃₀-Alkyl(meth)acrylat, b) 10 bis 40 Gew.-% mindestens eines Monomers, ausgewählt aus der Gruppe, bestehend aus Maleinsäure, Maleinanhydrid, Acrylsäure und Methacrylsäure und c) 0 bis 50 Gew.-% mindestens eines Monomers, ausgewählt aus der Gruppe, bestehend aus C₁₋₇-Alkyl(meth)acrylaten, Styrol, Vinylacetat und Acrylnitril, gebildet werden.

6. Emulsion gemäß einem der Ansprüche 1 bis 5, worin das die organische Phase stabilisierende Material ein Tensid ist, welches ein hydrophiles/lipophiles Gleichgewicht von unter 7, vorzugsweise im Bereich von 2 bis 6 aufweist.

7. Emulsion gemäß einem der Ansprüche 1 bis 6, worin die Menge an wasserlöslichem Stabilisierungsmaterial 0,1 bis 15,0 Gew.-% der Emulsion ausmacht.

8. Emulsion gemäß einem der Ansprüche 1 bis 7, worin die Menge an organischem Lösungsmittel zwischen 5 und 50 Gew.-% der Emulsion ausmacht.

9. Emulsion gemäß einem der Ansprüche 1 bis 8, worin die Menge an die organische Phase stabilisierendem Material 0,1 bis 15,0 Gew.-% der Emulsion ausmacht.

10. Emulsion gemäß einem der Ansprüche 1 bis 9, worin der lichtempfindliche aktive Bestandteil ein Material ist, welches sich in reiner Form bei Belichtung, vorzugsweise durch Sonnenlicht, zersetzt.

11. Emulsion gemäß einem der Ansprüche 1 bis 10. worin der lichtempfindliche aktive Bestandteil aus einem Pestizid, einem Herbizid und einem Veterinärbehandlungsmittel ausgewählt ist.

12. Emulsion gemäß einem der Ansprüche 1 bis 11, worin der lichtempfindliche aktive Bestandteil aus lichtempfindlichen Pyrethroiden ausgewählt ist.

13. Schädlingsbekämpfungsmittel-Formulierung, umfassend eine Emulsion gemäß Anspruch 1, worin der lichtempfindliche aktive Bestandteil eine lichtempfindliche Pestizidverbindung ist.

14. Formulierung gemäß Anspruch 13, worin das wasserlösliche Stabilisierungsmaterial aus Additionscopolymeren von wasserlöslichen, ethylenisch ungesättigten Monomeren, die frei von Polyethoxygruppen sind, und wasserunlöslichen, ethylenisch ungesättigten Monomeren ausgewählt ist.

15. Formulierung gemäß Anspruch 13 oder Anspruch 14, worin das wasserlösliche Stabilisierungsmaterial aus Additionscopolymeren ausgewählt ist, welche aus a) mindestens einem ethylenisch ungesättigten Carbonsäureester und b) mindestens einer/m ethylenisch ungesättigten Carbonsäure oder ethylenisch ungesättigten Carbonsäureanhydrid gebildet werden, und wobei das Polymer mit einer basischen Verbindung kombiniert wird, um das Polymer wasserlöslich zu machen.

16. Formulierung gemäß einem der Ansprüche 13 bis 15, worin die organische Phase ein organisches Lösungsmittel umfasst, welches aus Carbonsäureestern ausgewählt ist, welche eine Alkoholeinheit mit mindestens vier Kohlenstoffatomen umfassen.

17. Formulierung gemäß einem der Ansprüche 13 bis 16, worin die organische Phase ein die organische Phase stabilisierendes Material umfasst, welches aus Additionscopolymeren ausgewählt ist, welche aus a) mindestens einem ethylenisch ungesättigten, C₈₋₃₀-Alkyleinheiten enthaltenden Monomer, b) mindestens einer/m ethylenisch ungesättigten Carbonsäure oder ethylenisch ungesättigten Säureanhydrid und c) wahlweise anderen wasserunlöslichen, ethylenisch ungesättigten Monomeren gebildet werden.

18. Formulierung gemäß einem der Ansprüche 13 bis 17, worin das die organische Phase stabilisierende Material aus Additionspolymeren ausgewählt ist, welche aus a) 60 bis 90 Gew.-% C₈₋₃₀-Alkyl(meth)acrylat, b) 10 bis 40 Gew.-% mindestens eines Monomers, ausgewählt aus der Gruppe, bestehend aus Maleinsäure, Maleinanhydrid, Acrylsäure und Methacrylsäure und c) 0 bis 50 Gew.-% mindestens eines Monomers, ausgewählt aus der Gruppe, bestehend aus C₁₋₇-Alkyl(meth)acrylaten, Styrol. Vinylacetat und Acrylnitril, gebildet werden.

19. Formulierung gemäß einem der Ansprüche 13 bis 18, worin das die organische Phase stabilisierende Material ein Tensid ist, welches ein hydrophiles/lipophiles Gleichgewicht von unter 7, vorzugsweise im Bereich von 2 bis 6 aufweist.

20. Formulierung gemäß einem der Ansprüche 13 bis 19, worin die Menge an wasserlöslichem Stabilisierungsmaterial 0,1 bis 15,0 Gew.-% der Emulsion ausmacht.

21. Formulierung gemäß einem der Ansprüche 13 bis 20, worin die Menge an organischem Lösungsmittel 5 bis 50 Gew.-% der Emulsion ausmacht.

22. Formulierung gemäß einem der Ansprüche 13 bis 21, worin die Menge an die organische Phase stabilisierendem Material zwischen 0,1 und 15,0 Gew.-% der Emulsion ausmacht.

23. Formulierung gemäß einem der Ansprüche 13 bis 22, worin das lichtempfindliche Pestizid ein Material ist, welches sich in reiner Form bei Belichtung, vorzugsweise durch Sonnenlicht, zersetzt.

24. Formulierung gemäß einem der Ansprüche 13 bis 23, worin das Pestizid aus lichtempfindlichen Pyrethroiden ausgewählt ist.

25. Verfahren zum Schützen einer lichtempfindlichen Substanz, welche sich in reiner Form bei Belichtung, vorzugsweise durch Sonnenlicht, zersetzt, wobei das Verfahren zum Schützen die Schritte
A) Bilden einer organischen Phase, welche die lichtempfindliche Substanz umfasst,
B) Bilden einer wässrigen Phase, welche Wasser und ein wasserlösliches Stabilisierungsmaterial umfasst,
C) Einführen der in Schritt 1 gebildeten organischen Phase in die in Schritt 2 gebildete wässrige Phase und mechanisches Homogenisieren, wodurch eine stabile Öl-in-Wasser-Emulsion bereitgestellt wird,
umfasst, wobei das wasserlösliche Stabilisierungsmaterial ein wasserlösliches Stabilisierungspolymer ist, welches eine Vielzahl von hydrophilen und hydrophoben Gruppen aufweist und aus
partiell hydrolysiertem Polyvinylacetat und
Additionscopolymeren, welche aus
(i) mindestens einem ethylenisch ungesättigten Carbonsäureester und
(ii) mindestens einer/m ethylenisch ungesättigten Carbonsäure oder ethylenisch ungesättigten Carbonsäureanhydrid gebildet werden,
ausgewählt ist, und wobei die organische Phase weiterhin
a) ein organisches Lösungsmittel, welches bei 25°C eine Flüssigkeit darstellt, und/oder
b) ein die organische Phase stabilisierendes Material, welches hydrophobe Einheiten aufweist und ein Material ist, welches in der organischen Phase löslicher als in der wässrigen Phase ist, umfasst, und wobei der lichtempfindliche aktive Bestandteil Pyrethrum oder ein Pyrethroid der ersten oder zweiten Generation ist.

26. Verfahren gemäß Anspruch 25, in welchem die Zersetzung der lichtempfindlichen Substanz bei Belichtung, vorzugsweise durch Sonnenlicht, so reduziert wird, dass im Wesentlichen vollständige Zersetzung eine mindestens 2x so lange Zeit benötigt, als wenn die Substanz in reiner Form vorliegt.

27. Verfahren gemäß Anspruch 25 oder Anspruch 26, in welchem die Zersetzung der lichtempfindlichen Substanz bei Belichtung, vorzugsweise durch Sonnenlicht, so reduziert wird, dass im Wesentlichen vollständige Zersetzung eine 5x und 10x so lange Zeit benötigt, als wenn die Substanz in reiner Form vorliegt.

## Revendications

1. Emulsion, comprenant une phase organique discontinue qui est répartie dans l'ensemble d'une phase aqueuse continue,
dans laquelle la phase organique comprend une matière active photosensible,
et l'émulsion est stabilisée par une matière stabilisante hydrosoluble dans la phase aqueuse,
dans laquelle la matière stabilisante hydrosoluble est un polymère stabilisant hydrosoluble qui contient une pluralité de groupes hydrophiles et hydrophobes et qui est choisi parmi
- un poly(acétate de vinyle) partiellement hydrolysé et
- des copolymères d'addition formés à partir de
(i) au moins un ester d'acide carboxylique à insaturation éthylénique et
(ii) au moins un acide carboxylique à insaturation éthylénique ou un anhydride carboxylique à insaturation éthylénique,
et dans laquelle la phase organique comprend en outre
a) un solvant organique qui est liquide à 25°C et/ou
b) une matière stabilisant la phase organique qui comprend des fractions hydrophobes et qui est une matière qui est plus soluble dans la phase organique que dans la phase aqueuse,
dans laquelle la matière active photosensible est le pyrèthre ou un pyréthroïde de première ou deuxième génération.

2. Emulsion selon la revendication 1, dans laquelle la matière stabilisante hydrosoluble est choisie parmi des copolymères d'addition formés à partir de a) au moins un ester d'acide carboxylique à insaturation éthylénique et b) au moins un acide carboxylique à insaturation éthylénique ou un anhydride carboxylique à insaturation éthylénique, et dans laquelle le polymère est combiné à un composé basique afin de rendre le polymère hydrosoluble.

3. Emulsion selon la revendication 1 ou la revendication 2, dans laquelle la phase organique comprend un solvant organique qui est choisi parmi des esters d'acides carboxyliques comprenant une fraction alcool d'au moins 4 atomes de carbone.

4. Emulsion selon l'une quelconque des revendications 1 à 3, dans laquelle la phase organique comprend une matière stabilisant la phase organique qui est choisie parmi des copolymères d'addition formés à partir de a) au moins un monomère à insaturation éthylénique contenant des fractions alkyle en C₈ à C₃₀, b) au moins un acide carboxylique à insaturation éthylénique ou un anhydride à insaturation éthylénique et c) éventuellement d'autres monomères à insaturation éthylénique non hydrosolubles.

5. Emulsion selon l'une quelconque des revendications 1 à 4, dans laquelle la matière stabilisant la phase organique est choisie parmi des polymères d'addition formés à partir de a) 60% à 90% en poids de (méth)acrylate d'alkyle en C₈ à C₃₀, b) 10% à 40% en poids d'au moins un monomère choisi dans le groupe formé par l'acide maléique, l'anhydride maléique, l'acide acrylique et l'acide méthacrylique et c) 0% à 50% en poids d'au moins un monomère choisi dans le groupe formé par les (méth)acrylates d'alkyle en C₁ à C₇, le styrène, l'acétate de vinyle et l'acrylonitrile.

6. Emulsion selon l'une quelconque des revendications 1 à 5, dans laquelle la matière stabilisant la phase organique est un tensio-actif qui a un équilibre hydrophile/lipophile inférieur à 7, de préférence dans la gamme de 2 à 6.

7. Emulsion selon l'une quelconque des revendications 1 à 6, dans laquelle la quantité de matière stabilisante hydrosoluble est de 0,1% à 15,0% en poids de l'émulsion.

8. Emulsion selon l'une quelconque des revendications 1 à 7, dans laquelle la quantité de solvant organique est comprise entre 5% et 50% en poids de l'émulsion.

9. Emulsion selon l'une quelconque des revendications 1 à 8, dans laquelle la quantité de matière stabilisant la phase organique est de 0,1% à 15,0% en poids de l'émulsion.

10. Emulsion selon l'une quelconque des revendications 1 à 9, dans laquelle la matière active photosensible est une matière qui, sous forme pure, se décompose lors d'une exposition à la lumière, de préférence à la lumière du soleil.

11. Emulsion selon l'une quelconque des revendications 1 à 10, dans laquelle la matière active photosensible est choisi parmi une matière active pour traitement pesticide, herbicide et vétérinaire.

12. Emulsion selon l'une quelconque des revendications 1 à 11, dans laquelle la matière active photosensible est choisie parmi les pyréthroïdes photosensibles.

13. Formulation antiparasitaire comprenant une émulsion selon la revendication 1, dans laquelle la matière active photosensible est un composé pesticide photosensible.

14. Formulation selon la revendication 13, dans laquelle la matière stabilisante hydrosoluble est choisie parmi des copolymères d'addition de monomères à insaturation éthylénique hydrosolubles exempts de groupes polyéthoxy et de monomères à insaturation éthylénique non hydrosolubles.

15. Formulation selon la revendication 13 ou la revendication 14, dans laquelle la matière stabilisante hydrosoluble est choisie parmi des copolymères d'addition formés à partir de a) au moins un ester d'acide carboxylique à insaturation éthylénique et b) au moins un acide carboxylique à insaturation éthylénique ou un anhydride carboxylique à insaturation éthylénique, et dans laquelle le polymère est combiné à un composé basique afin de rendre le polymère hydrosoluble.

16. Formulation selon l'une quelconque des revendications 13 à 15, dans laquelle la phase organique comprend un solvant organique qui est choisi parmi des esters d'acides carboxyliques comprenant une fraction alcool d'au moins 4 atomes de carbone.

17. Formulation selon l'une quelconque des revendications 13 à 16, dans laquelle la phase organique comprend une matière stabilisant la phase organique qui est choisie parmi des copolymères d'addition formés à partir de a) au moins un monomère à insaturation éthylénique contenant des fractions alkyle en C₈ à C₃₀, b) au moins un acide carboxylique à insaturation éthylénique ou un anhydride à insaturation éthylénique et c) éventuellement d'autres monomères à insaturation éthylénique non hydrosolubles.

18. Formulation selon l'une quelconque des revendications 13 à 17, dans laquelle la matière stabilisant la phase organique est choisie parmi des polymères d'addition formés à partir de a) 60% à 90% en poids de (méth)acrylate d'alkyle en C₈ à C₃₀, b) 10% à 40% en poids d'au moins un monomère choisi dans le groupe formé par l'acide maléique, l'anhydride maléique, l'acide acrylique et l'acide méthacrylique et c) 0% à 50% en poids d'au moins un monomère choisi dans le groupe formé par les (méth)acrylates d'alkyle en C₁ à C₇, le styrène, l'acétate de vinyle et l'acrylonitrile.

19. Formulation selon l'une quelconque des revendications 13 à 18, dans laquelle la matière stabilisant la phase organique est un tensio-actif qui a un équilibre hydrophile/lipophile inférieur à 7, de préférence dans la gamme de 2 à 6.

20. Formulation selon l'une quelconque des revendications 13 à 19, dans laquelle la quantité de matière stabilisante hydrosoluble est de 0,1% à 15,0% en poids de l'émulsion.

21. Formulation selon l'une quelconque des revendications 13 à 20, dans laquelle la quantité de solvant organique est de 5% à 50% en poids de l'émulsion.

22. Formulation selon l'une quelconque des revendications 13 à 21, dans laquelle la quantité de matière stabilisant la phase organique est comprise entre 0,1% et 15,0% en poids de l'émulsion.

23. Formulation selon l'une quelconque des revendications 13 à 22, dans laquelle le pesticide photosensible est une matière qui, sous forme pure, se décompose lors d'une exposition à la lumière, de préférence à la lumière du soleil.

24. Formulation selon l'une quelconque des revendications 13 à 23, dans laquelle le pesticide est choisi parmi les pyréthroïdes photosensibles.

25. Procédé de protection d'une matière photosensible qui, sous forme pure, se décompose lors d'une exposition à la lumière, de préférence à la lumière du soleil, ledit procédé de protection comprenant les étapes consistant à
A) former une phase organique comprenant la matière photosensible,
B) former une phase aqueuse comprenant de l'eau et une matière stabilisante hydrosoluble,
C) introduire la phase organique formée à l'étape 1 dans la phase aqueuse formée à l'étape 2 et les homogénéiser par voie mécanique, pour obtenir ainsi une émulsion huile-dans-eau stable,
dans lequel la matière stabilisante hydrosoluble est un polymère stabilisant hydrosoluble qui contient une pluralité de groupes hydrophiles et hydrophobes et qui
est choisi parmi
- un poly(acétate de vinyle) partiellement hydrolysé et
- des copolymères d'addition formés à partir de
(i) au moins un ester d'acide carboxylique à insaturation éthylénique et
(ii) au moins un acide carboxylique à insaturation éthylénique ou un anhydride carboxylique à insaturation éthylénique,
et dans lequel la phase organique comprend en outre
a) un solvant organique qui est liquide à 25°C et/ou
b) une matière stabilisant la phase organique qui comprend des fractions hydrophobes et qui est une matière qui est plus soluble dans la phase organique que dans la phase aqueuse,
et dans lequel la matière active photosensible est le pyrèthre ou un pyréthroïde de première ou deuxième génération.

26. Procédé selon la revendication 25, dans lequel la décomposition de la matière photosensible lors d'une exposition à la lumière, de préférence à la lumière du soleil, est réduite de sorte que la décomposition quasi-complète est au moins deux fois plus longue que lorsque la substance est sous forme pure.

27. Procédé selon la revendication 25 ou la revendication 26, dans lequel la décomposition de la matière photosensible lors d'une exposition à la lumière, de préférence à la lumière du soleil, est réduite de sorte que la décomposition quasi-complète est cinq à dix fois plus longue que lorsque la substance est sous forme pure.
